(19)

**Europäisches Patentamt**

**European Patent Office**

**Office européen des brevets**

(11) **EP 4 398 396 A1**

(12) **EUROPEAN PATENT APPLICATION**
published in accordance with Art. 153(4) EPC

(43) Date of publication:
**10.07.2024 Bulletin 2024/28**

(21) Application number: **22864325.0**

(22) Date of filing: **22.08.2022**

(51) International Patent Classification (IPC):
$H01M\ 50/293$ (2021.01)    $C08J\ 5/18$ (2006.01)
$C08K\ 3/013$ (2018.01)    $C08K\ 5/14$ (2006.01)
$C08K\ 5/3492$ (2006.01)    $C08L\ 9/02$ (2006.01)
$H01M\ 10/613$ (2014.01)    $H01M\ 10/6555$ (2014.01)
$H01M\ 50/204$ (2021.01)

(52) Cooperative Patent Classification (CPC):
C08J 5/18; C08K 3/013; C08K 5/14; C08K 5/3492;
C08L 9/02; H01M 10/613; H01M 10/6555;
H01M 50/204; H01M 50/293; Y02E 60/10

(86) International application number:
**PCT/JP2022/031626**

(87) International publication number:
**WO 2023/032741 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021 JP 2021141950**

(71) Applicant: **Zeon Corporation**
**Tokyo 100-8246 (JP)**

(72) Inventor: **MOSAKI Shiho**
**Tokyo 100-8246 (JP)**

(74) Representative: **Maiwald GmbH**
**Elisenhof**
**Elisenstraße 3**
**80335 München (DE)**

(54) **BATTERY MODULE SHEET AND BATTERY MODULE**

(57)    Provided is a sheet for battery module that can reduce the occurrence of problems associated with thermal runaway in a battery module. The sheet for battery module contains a nitrile rubber cross-linked product and a thermally dissipated filler, and the thermally dissipated filler is 1 part by mass or more and 200 parts by mass or less per 100 parts by mass of the nitrile rubber.

EP 4 398 396 A1

**Description**

TECHNICAL FIELD

This disclosure relates to a sheet for battery module and a battery module.

Lithium ion batteries are used in wide range of applications such as in-car application, electric power leveling application, and mobile application from a viewpoint of energy density, output density, durability, etc. In an actual use, lithium ion batteries are often used in a form of a battery module in which a plurality of battery cells are internally arranged. When one battery cell in the battery module has an abnormally high temperature due to any factor to cause thermal runaway, adjacent other battery cells might be adversely affected, which could cause thermal runaway in a chain reaction.

A sheet for battery module to inhibit chain-reaction thermal runaway of a plurality of battery cells has been proposed. For example, Patent Literature (PTL) 1 proposes a thermal runaway prevention sheet that includes at least one of mineral powder and a flame retardant and starts endothermic reaction at a predetermined temperature to cause structural change.

The ways of using a sheet for battery module includes arranging the sheet between adjacent battery cells in a battery module to be an intercell separator. However, for example, in a case of a lithium ion battery, the battery cells may be deformed by expansion, etc. even due to charge and discharge. PTL 2, with this in mind, proposes forming a sheet for battery module of an insulating rubber composition to have a predetermined compressive elastic modulus, in order to increase the ability to follow the deformation of battery cells.

CITATION LIST

Patent Literature

PTL 1: JP2018206605A
PTL 2: WO2020129274A

SUMMARY

(Technical Problem)

In recent years, the demand for safety has increased, and a sheet for battery module that can reduce the occurrence of problems associated with thermal runaway has been still required.

The problems associated with thermal runaway encompass not only a problem that, when a battery cell causes thermal runaway, adjacent battery cells are adversely affected to cause thermal runaway in a chain reaction, but also a problem that, when a battery cell ignites due to thermal runaway, adjacent battery cells and members of the battery module catch fire.

(Solution to Problem)

This disclosure advantageous resolves the above object and relates to a sheet for battery module, which contains a nitrile rubber cross-linked product and a thermally dissipated filler, in which the thermally dissipated filler is 1 part by mass or more and 200 parts by mass or less per 100 parts by mass of the nitrile rubber.

The sheet for battery module of this disclosure (hereinafter, also referred to as the sheet of this disclosure) are presumed to have the following functions. In the sheet of this disclosure, the nitrile rubber cross-linked product having excellent rubber elasticity is used as a matrix, which inhibits thickness change and stress change, and the thermally dissipated filler is contained, which causes close battery cells to have an abnormally high temperature to heat the sheet. When the sheet has a predetermined temperature (dissipation temperature) or more, the thermally dissipated filler dissipates by vaporization, decomposition, etc. At this time, the thermally dissipated filler absorbs heat, or the part occupied by the thermally dissipated filler is replaced with air gap, which increases the thermal resistance of the sheet to inhibit thermal conduction. It is presumed that the combination of these allows the sheet of this disclosure to effectively prevent the problems associated with thermal runaway.

For example, when the sheet for battery module of this disclosure is arranged between adjacent battery cells, even if a battery cell has an abnormally high temperature to expand, the intercell distance is sufficiently ensured, and the thermal resistance of the sheet increases to inhibit thermal conduction. Thus, it is possible to effectively prevent the induction of thermal runaway at adjacent battery cells.

Moreover, arranging the sheet of this disclosure in proximity to the battery cell can be expected to prevent adjacent battery cells and members from catching fire even if that battery cell ignites.

The battery module is a battery constitutional unit obtained by housing a plurality of battery cells in a housing.

The battery cell is a battery constitutional unit obtained by housing a positive electrode material, a negative electrode material, and an electrolyte in a case member and having a positive electrode tab or a positive electrode terminal, and a negative electrode tab or a negative electrode terminal. No specific limitations are placed on the shape of the cell. The shape of the cell may be a cylinder type, prismatic type, laminated type, coin type, or the like.

The battery is a secondary battery such as a lithium ion battery, lithium ion polymer battery, nickel metal hydride battery, lithium sulfur battery, nickel cadmium battery, nickel iron battery, nickel zinc battery, sodium sulfur battery, lead storage battery, and air battery.

The thermally dissipated filler is a filler formed of a material that dissipates by vaporization, decomposition, etc. at a predetermined temperature (hereinafter, also referred to as a dissipation temperature).

The sheet for battery module of this disclosure is advantageous in terms of reaction force buffering of the battery cell, in that the breaking strength is 10.0 MPa or more.

The breaking strength is a value obtained by measuring a test piece punched out from the sheet with a No. 3 dumbbell, in accordance with JISK6251.

It is advantageous in terms of inhibiting thermal conduction by the sheet under abnormally high temperature that the thermally dissipated filler has a dissipation temperature of 50°C or more and 500°C or less and absorbs heat at the time of dissipation.

Examples of the thermally dissipated filler include a melamine compound.

It is advantageous in terms of inhibiting thickness change and stress change that the nitrile rubber before cross-linking is a nitrile rubber having an iodine value of 120 or less. The cross-linked product is preferably a cross-linked product formed by an organic peroxide cross-linker because the shape is easily kept even under high temperature.

This disclosure also relates to a battery module equipped with the above sheet for battery module. It is advantageous in terms of resolving the problems associated with thermal runaway to arrange the above sheet for battery module in proximity to at least one battery cell of the plurality of battery cells contained in the battery module. It is advantageous in terms of preventing chain-reaction thermal runaway to arrange the above sheet for battery module between adjacent battery cells.

(Advantageous Effect)

The use of the sheet for battery module of this disclosure for the battery module can reduce the occurrence of the problems associated with thermal runaway.

For example, when the sheet for battery module of this disclosure is arranged between adjacent battery cells, even if a battery cell has an abnormally high temperature to expand, the intercell distance is sufficiently ensured, and the thermal resistance increases to inhibit thermal conduction. Thus, it is possible to effectively prevent the induction of thermal runaway at adjacent battery cells. Moreover, arranging the sheet of this disclosure in proximity to the battery cell can be expected to prevent adjacent battery cells and members from catching fire even if that battery cell ignites.

BRIEF DESCRIPTION OF THE DRAWINGS

In the accompanying drawings:

FIG. 1 schematically illustrates an example of a battery module that uses a sheet for battery module of this disclosure, and the sheet of this disclosure is arranged between battery cells;
FIG. 2 schematically illustrates another example of the battery module that uses the sheet for battery module of this disclosure, and the sheet of this disclosure is arranged in proximity to battery cells; and
FIG. 3 schematically illustrates another use example of the sheet for battery module of this disclosure, and each of a plurality of battery cells is wrapped by the sheet of this disclosure.

DETAILED DESCRIPTION

The following describes an embodiment of this disclosure in detail.

A sheet for battery module of this disclosure contains a nitrile rubber cross-linked product and a thermally dissipated filler, and the thermally dissipated filler is 1 part by mass or more and 200 parts by mass or less per 100 parts by mass of a nitrile rubber before cross-linking. The use of the nitrile rubber cross-linked product having excellent rubber elasticity as a matrix can inhibit the thickness change and stress change in the sheet. The sheet of this disclosure can absorb the deformation including expansion and contraction of the battery cell not only under abnormally high temperature but also at the normal use.

The thermally dissipated filler is preferably 3 parts by mass or more, and more preferably 10 parts by mass or more, in terms of increasing thermal resistance under abnormally high temperature. The thermally dissipated filler is preferably 180 parts by mass or less, and more preferably 150 parts by mass or less, in terms of the balance with the nitrile rubber cross-linked product as a matrix.

<Thermally dissipated filler>

At least a part of the thermally dissipated filler dissipates by vaporization, decomposition, etc. when the thermally dissipated filler has a predetermined temperature (dissipation temperature) or more by heating. The dissipation temperature can be 50°C or more and 500°C or less. The dissipation temperature is preferably 80°C or more, more preferably 100°C or more, and further preferably 120°C or more, in terms of processability. The dissipation temperature is preferably 350°C or less, and more preferably 250°C or less, in terms of preventing the problems associated with thermal runaway. The dissipation temperature encompasses a decomposition temperature and a sublimation temperature and can be confirmed as a temperature at which the weight loss starts when the temperature is gradually raised.

Examples of the thermally dissipated filler include melamine compounds such as melamine (decomposition temperature: 347°C) and melamine cyanurate (decomposition temperature: 350°C); chemical foaming agents such as dinitrosopentamethylenetetramine (DTP; decomposition temperature: 210°C), azodicarbonamide (ADCA; decomposition temperature: 210°C), p,p'-oxybis(benzenesulfonyl hydrazide) (OBSH; decomposition temperature: 164°C), hydrazo dicarbonamide (HDCA; decomposition temperature: 245°C), barium azodicarboxylate (Ba/AC; decomposition temperature: 250°C), and sodium hydrogen carbonate (NaHCOs; decomposition temperature: 150°C); and inorganic compounds such as aluminum hydroxide (decomposition temperature: 200°C).

In terms of processability, air gap generation, and heat absorption amount, thermally dissipated compounds such as melamine cyanurate are preferable.

In terms of reducing the thermal conductivity of the sheet, the thermally dissipated filler that absorbs heat at the time of dissipation is preferable. Examples of the thermally dissipated filler include melamine cyanurate, HDCA, sodium hydrogen carbonate, and aluminum hydroxide.

The thermally dissipated filler can have an average particle diameter of 0.1 $\mu$m or more and 10 $\mu$m or less. In terms of ease of handling, the average particle diameter is preferably 0.3 $\mu$m or more, and more preferably 0.5 $\mu$m or more. In terms of dispersibility, the average particle diameter is preferably 5 $\mu$m or less, and more preferably 3 $\mu$m or less. The thermally dissipated filler may have a form enclosed in a microcapsule.

One thermally dissipated filler may be used individually, or two or more thermally dissipated fillers may be used in combination in a freely selected ratio.

<Nitrile rubber cross-linked product>

The nitrile rubber cross-linked product includes a structure in which a nitrile rubber is cross-linked.

[Nitrile rubber]

The nitrile rubber before cross-linking is a polymer obtained by polymerizing an $\alpha,\beta$-ethylenically unsaturated nitrile monomer and may be a copolymer of the $\alpha,\beta$-ethylenically unsaturated nitrile monomer and another monomer that is copolymerizable with the $\alpha,\beta$-ethylenically unsaturated nitrile monomer.

($\alpha,\beta$-ethylenically unsaturated nitrile monomer)

No specific limitations are place on the $\alpha,\beta$-ethylenically unsaturated nitrile monomer so long as it is an $\alpha,\beta$-ethylenically unsaturated compound having a nitrile group. Examples of the $\alpha,\beta$-ethylenically unsaturated nitrile monomer include acrylonitrile; $\alpha$-halogenoacrylonitrile such as $\alpha$-chloroacrylonitrile and $\alpha$-bromoacrylonitrile; and $\alpha$-alkyl acrylonitrile such as methacrylonitrile. Of these $\alpha,\beta$-ethylenically unsaturated nitrile monomers, acrylonitrile and methacrylonitrile are preferable, and acrylonitrile is more preferable.

One $\alpha,\beta$-ethylenically unsaturated nitrile monomer may be used individually, or two or more $\alpha,\beta$-ethylenically unsaturated nitrile monomers may be used in combination in a freely selected ratio.

The $\alpha,\beta$-ethylenically unsaturated nitrile monomer is preferably 20 mass% or more in 100 mass% of the total monomers used for formation of the nitrile rubber. In a case of the copolymer with the other monomer that is copolymerizable with the $\alpha,\beta$-ethylenically unsaturated nitrile monomer, the $\alpha,\beta$-ethylenically unsaturated nitrile monomer can be 20 mass% or more and 90 mass% or less, is preferably 30 mass% or more, and more preferably 35 mass% or more, and is preferably 80 mass% or less, and more preferably 70 mass% or less. With these ranges, the nitrile rubber cross-linked product can have excellent mechanical characteristics with keeping good heat resistance and chemical stability.

(Conjugated diene monomer)

When the nitrile rubber is a copolymer of the $\alpha,\beta$-ethylenically unsaturated nitrile monomer and the other monomer that is copolymerizable with the $\alpha,\beta$-ethylenically unsaturated nitrile monomer, the other monomer that is copolymerizable with the $\alpha,\beta$-ethylenically unsaturated nitrile monomer is preferably a conjugated diene monomer in terms of the expression of rubber elasticity.

No specific limitations are placed on the conjugated diene monomer. However, examples of the conjugated diene monomer include 1,3-butadiene, isoprene, 2,3-dimethyl-1,3-butadiene, and 1,3-pentadiene. Of these conjugated diene monomers, 1,3-butadiene and isoprene are preferable, and 1,3-butadiene is more preferable.

One conjugated diene monomer may be used individually, or two or more conjugated diene monomers may be used in combination in a freely selected ratio.

The conjugated diene monomer is preferably 10 mass% or more and 80 mass% or less, more preferably 20 mass% or more, and further preferably 30 mass% or more, and is more preferably 70 mass% or less, and further preferably 65 mass% or less, in 100 mass% of the total monomers used for formation of the nitrile rubber. With these ranges, the nitrile rubber cross-linked product can have excellent rubber elasticity with keeping good heat resistance and chemical stability. The conjugated diene monomer may be in a hydrogenated unit in the nitrile rubber.

(Other monomers)

Other monomers that are copolymerizable with the $\alpha,\beta$-ethylenically unsaturated nitrile monomer, other than the conjugated diene monomer (hereinafter, also referred to as other monomers) can include a non-conjugated diene monomer; ethylene, $\alpha$-olefin monomer; aromatic vinyl monomer; $\alpha,\beta$-ethylenically unsaturated monocarboxylic acid and ester thereof; $\alpha,\beta$-ethylenically unsaturated polybasic carboxylic acid, and monoester, polyester, or anhydride thereof; cross-linkable monomer; and copolymerizable antioxidant.

No specific limitations are placed on the non-conjugated diene monomer. However, the non-conjugated diene monomer preferably has the number of carbon atoms of 5 to 12. Examples of the non-conjugated diene monomer include 1,4-pentadiene, 1,4-hexadiene, vinyl norbornene, and dicyclopentadiene.

No specific limitations are placed on the $\alpha$-olefin monomer. However, the $\alpha$-olefin monomer preferably has the number of carbon atoms of 3 to 12. Examples of the $\alpha$-olefin monomer include propylene, 1-butene, 4-methyl-1-pentene, 1-hexene, and 1-octene.

No specific limitations are placed on the aromatic vinyl monomer. Examples of the aromatic vinyl monomer include styrene, $\alpha$-methylstyrene, and vinylpyridine.

No specific limitations are placed on the $\alpha,\beta$-ethylenically unsaturated monocarboxylic acid. Examples of the $\alpha,\beta$-ethylenically unsaturated monocarboxylic acid include acrylic acid, methacrylic acid, crotonic acid, and cinnamic acid. Examples of the $\alpha,\beta$-ethylenically unsaturated monocarboxylic acid ester include alkyl ester thereof. An alkyl ester having the number of carbon atoms of 1 to 8 is preferable. Specifically, examples of the alkyl ester having the number of carbon atoms of 1 to 8 include ethyl (meth)acrylate, butyl (meth)acrylate, and 2-ethylhexyl (meth)acrylate.

Here, "(meth)acryl" is used to indicate "acryl" or "methacryl".

No specific limitations are placed on the $\alpha,\beta$-ethylenically unsaturated polybasic carboxylic acid. Examples of the $\alpha,\beta$-ethylenically unsaturated polybasic carboxylic acid include maleic acid, fumaric acid, citraconic acid, and itaconic acid. Examples of the $\alpha,\beta$-ethylenically unsaturated polybasic carboxylic acid ester include alkyl ester thereof. An alkyl ester having the number of carbon atoms of 1 to 8 is preferable.

Examples of the $\alpha,\beta$-ethylenically unsaturated polybasic carboxylic acid monoester include maleic acid monoalkyl ester such as monomethyl maleate, monoethyl maleate, monopropyl maleate, and mono-n-butyl maleate; fumaric acid monoalkyl ester such as monomethyl fumarate, monoethyl fumarate, monopropyl fumarate, and mono-n-butyl fumarate; citraconic acid monoalkyl ester such as monomethyl citraconate, monoethyl citraconate, monopropyl citraconate, and mono-n-butyl citraconate; and itaconic acid monoalkyl ester such as monomethyl itaconate, monoethyl itaconate, monopropyl itaconate, and mono-n-butyl itaconate.

Examples of the $\alpha,\beta$-ethylenically unsaturated polybasic carboxylic acid polyester include dimethyl maleate, di-n-butyl maleate, dimethyl fumarate, di-n-butyl fumarate, dimethyl itaconate, and di-n-butyl itaconate.

Examples of the $\alpha,\beta$-ethylenically unsaturated polybasic carboxylic acid anhydride include maleic anhydride and itaconic anhydride.

No specific limitations are placed on the cross-linkable monomer. Examples of the cross-linkable monomer include polyfunctional ethylenically unsaturated monomers such as: divinyl compounds such as divinylbenzene; di(meth)acrylic acid esters such as ethylene di(meth)acrylate, diethylene glycol di(meth)acrylate, and ethylene glycol di(meth)acrylate; and trimethacrylic acid esters such as trimethylolpropane tri(meth)acrylate, as well as self-cross-linkable monomers such as N-methylol (meth)acrylamide and N,N'-dimethylol (meth)acrylamide.

No specific limitations are placed on the copolymerizable antioxidant. Examples of the copolymerizable antioxidant include N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinyl benzyloxy)aniline, and N-phenyl-4-(4-vinyl benzyloxy)aniline.

One of the other monomers may be used individually, or two or more of the other monomers may be used in combination in a freely selected ratio. The other monomer is preferably 50 mass% or less, more preferably 40 mass% or less, and further preferably 10 mass% or less in 100 mass% of the total monomers used for formation of the nitrile rubber. The other monomer may be 0 mass%.

The nitrile rubber can be a copolymer of the α,β-ethylenically unsaturated nitrile monomer and the conjugated diene monomer or a copolymer of the α,β-ethylenically unsaturated nitrile monomer, the conjugated diene monomer, and the other monomer. The unit induced from the conjugated diene monomer may be hydrogenated. The nitrile rubber may be a hydrogenated nitrile rubber (including a partial hydrogenated nitrile rubber). The examples and amounts of the respective monomers are as described above.

(Production of nitrile rubber)

No specific limitations are placed on a method of producing the nitrile rubber. Examples of the method of producing the nitrile rubber include a method of polymerizing the α,β-ethylenically unsaturated nitrile monomer and possibly a method of copolymerizing the α,β-ethylenically unsaturated nitrile monomer and the other monomer that is copolymerizable with the α,β-ethylenically unsaturated nitrile monomer. Examples of the polymerization method include emulsion polymerization, suspension polymerization, bulk polymerization, and solution polymerization. The emulsion polymerization is preferable in terms of ease of controlling the polymerization reaction. Hydrogenation (hydrogenation reaction) can be performed on the obtained polymer (copolymer) to control the iodine value of the nitrile rubber. No specific limitations are placed on the hydrogenation method, and a publicly known method can be employed.

The nitrile rubber can have a Mooney viscosity ($ML_{1+4}$, 100°C) of 10 or more and 250 or less. The Mooney viscosity is preferably 20 or more, and more preferably 30 or more, and is preferably 200 or less, and more preferably 180 or less.

The Mooney viscosity is a value measured in accordance with JIS K6300-1.

The iodine value of the nitrile rubber is preferably 120 or less, more preferably 60 or less, further preferably 40 or less, and particularly preferably 30 or less. No specific limitations are placed on the lower limit of the iodine value. The lower limit of the iodine value may be 0.

[Cross-linking of nitrile rubber]

One nitrile rubber to be cross-linked may be used individually, or two or more nitrile rubbers to be cross-linked may be used in combination in a freely selected ratio.

(Cross-linker)

A cross-linker can be used for cross-linking the nitrile rubber. No specific limitations are placed on the cross-linker. An organic peroxide cross-linker, a sulfuric cross-linker, etc. can be used, but the organic peroxide cross-linker is preferable.

No specific limitations are placed on the organic peroxide cross-linker. Examples of the organic peroxide cross-linker include dicumyl peroxide, cumene hydroperoxide, t-butyl cumyl peroxide, para-menthane hydroperoxide, di-t-butylperoxide, 1,3-bis(t-butylperoxy isopropyl)benzene, 1,4-bis(t-butylperoxy isopropyl)benzene, 1,1-di-t-butylperoxy-3,3-trimethylcyclohexane, 4,4-bis-(t-butyl-peroxy)-n-butylvalerate, 2,5-dimethyl-2,5-di-t-butylperoxy hexane, 2,5-dimethyl-2,5-di-t-butylperoxy hexane-3, 1,1-di-t-butylperoxy-3,5,5-trimethylcyclohexane, p-chlorobenzoyl peroxide, t-butylperoxyisopropyl carbonate, and t-butylperoxy benzoate. However, 1,3-bis(t-butylperoxy isopropyl)benzene and 1,4-bis(t-butylperoxy isopropyl)benzene are preferable in terms of heat resistance and rubber elasticity. One organic peroxide cross-linker may be used individually, or two or more organic peroxide cross-linkers may be used in combination in a freely selected ratio.

The organic peroxide cross-linker can be used with 0.5 parts by mass or more and 30 parts by mass or less per 100 parts by mass of the nitrile rubber. The organic peroxide cross-linker is preferably 1 part by mass or more and is preferably 20 parts by mass or less, in terms of breaking strength, breaking elongation, and rubber elasticity.

(Co-cross-linker)

The nitrile rubber may be cross-linked using a co-cross-linker. No specific limitations are placed on the co-cross-linker. However, a low molecular or high molecular compound having a plurality of radical reactive unsaturated groups in a molecule is preferable. Examples of the co-cross-linker include polyfunctional vinyl compounds such as divinylbenzene and divinylnaphthalene; isocyanurates such as triallyl isocyanurate and trimethallyl isocyanurate; cyanurates such as triallyl cyanurate; maleimides such as N,N'-m-phenylenedimaleimide; allylic esters of polyacids such as diallyl phthalate, diallyl isophthalate, diallyl maleate, diallyl fumarate, diallyl sebacate, and triallyl phosphate; diethylene glycol bisallyl carbonate; allyl ethers such as ethylene glycol diallyl ether, triallyl ether of trimethylolpropane, and partial allyl ether of pentaerythritol; allyl modified resins such as allylated novolak and allylated resol resin; and trifunctional to pentafunctional methacrylate compounds or acrylate compounds such as trimethylolpropane trimethacrylate and trimethylolpropane triacrylate. Of these co-cross-linkers, trifunctional to pentafunctional methacrylate compounds and acrylate compounds are preferable, and trimethylolpropane trimethacrylate is more preferable, in terms of rubber elasticity and hardness.

When the co-cross-linker is used, the co-cross-linker can be 1 part by mass or more and 20 parts by mass or less per 100 parts by mass of the nitrile rubber. The co-cross-linker is preferably 3 parts by mass or more in terms of rubber elasticity. The co-cross-linker is preferably 10 parts by mass or less in terms of breaking elongation.

(Cross-linkable composition)

The sheet for battery module of this disclosure contains the nitrile rubber cross-linked product and the thermally dissipated filler and is not limited so long as the thermally dissipated filler is 1 part by mass or more and 200 parts by mass or less per 100 parts by mass of the nitrile rubber.

The sheet of this disclosure may be obtained by blending the thermally dissipated filler into the nitrile rubber cross-linked product and shaping the blended materials into a sheet. However, it is convenient to form a sheet containing the nitrile rubber cross-linked product and the thermally dissipated filler by cross-linking the nitrile rubber in the presence of the thermally dissipated filler. Specifically, it is possible to form a sheet by preparing a cross-linkable composition in which the nitrile rubber, the thermally dissipated filler, and the cross-linker are blended and then shaping the cross-linkable composition into a sheet to cross-link the sheet after shaping or cross-linking the cross-linkable composition at the same time of the shaping. In preparing the cross-linkable composition, the thermally dissipated filler is blended with 1 part by mass or more and 200 parts by mass or less per 100 parts by mass of the nitrile rubber.

Other components may be added to the composition, in addition to the nitrile rubber, the thermally dissipated filler, and the cross-linker. Examples of the other components include an $\alpha,\beta$-ethylenically unsaturated carboxylic acid metal salt and a cross-linkable monomer. The contents described in relation to the nitrile rubber is applied to the cross-linkable monomer. The nitrile rubber cross-linked product only has to include a structure in which the nitrile rubber is cross-linked. The $\alpha,\beta$-ethylenically unsaturated carboxylic acid metal salt, the cross-linkable monomer, etc. may be incorporate into the cross-linked structure.

No specific limitations are placed on the $\alpha,\beta$-ethylenically unsaturated carboxylic acid metal salt. The $\alpha,\beta$-ethylenically unsaturated carboxylic acid metal salt can be a metal salt of $\alpha,\beta$-ethylenically unsaturated carboxylic acid having at least one free carboxyl group. Examples of the $\alpha,\beta$-ethylenically unsaturated carboxylic acid metal salt include metal salts of $\alpha,\beta$-ethylenically unsaturated monocarboxylic acid, $\alpha,\beta$-ethylenically unsaturated polybasic carboxylic acid, and $\alpha,\beta$-ethylenically unsaturated polybasic carboxylic acid monoester. The examples and preferred examples described in relation to the above nitrile rubber are applied to the $\alpha,\beta$-ethylenically unsaturated monocarboxylic acid, the $\alpha,\beta$-ethylenically unsaturated polybasic carboxylic acid, and the $\alpha,\beta$-ethylenically unsaturated polybasic carboxylic acid monoester.

The $\alpha,\beta$-ethylenically unsaturated carboxylic acid metal salt is preferably a metal salt of the $\alpha,\beta$-ethylenically unsaturated monocarboxylic acid or the $\alpha,\beta$-ethylenically unsaturated polybasic carboxylic acid. A metal salt of (meth)acrylic acid is more preferable in terms of the strength characteristics of the sheet.

No specific limitations are placed on the metal that forms the $\alpha,\beta$-ethylenically unsaturated carboxylic acid metal salt. Examples of the metal include zinc, magnesium, calcium, barium, titanium, chromium, iron, cobalt, nickel, aluminum, tin, and lead. Of these metals, zinc, magnesium, calcium, and aluminum are preferable, and zinc is more preferable, in terms of the strength characteristics of the sheet.

It is preferable to use the $\alpha,\beta$-ethylenically unsaturated carboxylic acid metal salt in terms of the strength increase of the sheet. In this case, the $\alpha,\beta$-ethylenically unsaturated carboxylic acid metal salt can be 5 parts by mass or more and 150 parts by mass or less, is preferably 10 parts by mass or more, and is 100 parts by mass or less, per 100 parts by mass of the nitrile rubber. The $\alpha,\beta$-ethylenically unsaturated carboxylic acid metal salt may be generated in the nitrile rubber by blending the corresponding $\alpha,\beta$-ethylenically unsaturated carboxylic acid and the corresponding metal or the compound of this metal into the nitrile rubber. Examples of the metal compound include an oxide, hydroxide, and carbonate of metal. Of these metal compounds, an oxide and a carbonate are preferable. When the metal is zinc, the metal compound is a zinc oxide or a zinc carbonate.

Various compounding agents, which are publicly known in the rubber field, can be used as the other components.

Examples of the compounding agents include a reinforcing agent, filler, antioxidant, light stabilizer, antiscorching agent, plasticizer, processing aid, lubricant, adhesive, lubricant agent, flame retardant, acid acceptor, fungicide, antistatic agent, colorant, silane coupling agent, cross-linking aid, cross-linking retardant, and foaming agent. The amounts of these compounding agents may be set in accordance with the objective of blending.

Rubber components other than the nitrile rubber may be blended into the composition within a range in which the effects of this disclosure are not impaired.

The composition can be prepared by mixing the above respective components. No specific limitations are placed on a method of preparing the composition. However, in general, the composition can be prepared by performing primary kneading on components except for the cross-linker and thermally unstable components (co-cross-linker, cross-linking aid, etc.) in a mixer such as a Banbury mixer, an inter mixer, and a kneader and then performing secondary kneading by transferring the components to a roll, etc. and adding the cross-linker and thermally unstable components thereto.

The timing of blending the thermally dissipated filler can be adjusted according to the dissipation temperature and the kneading temperature. When a thermally dissipated filler having a dissipation temperature sufficiently higher than the temperatures during the primary kneading and secondary kneading is used, the thermally dissipated filler may be blended at any timing during the primary kneading and secondary kneading. When the dissipation temperature is lower than or near the temperature during the primary kneading, the thermally dissipated filler can be blended during the secondary kneading by setting the temperature during the secondary kneading to a temperature that is sufficiently lower than the dissipation temperature.

The primary kneading can be performed at 20°C or more and 200°C or less. The temperature at which the primary kneading is performed is preferably 50°C or more and is preferably 170°C or less. The kneading time can be set as appropriate.

The secondary kneading can be performed at 20°C or more and 100°C or less. The temperature at which the secondary kneading is performed is preferably 30°C or more and is preferably 80°C or less. The kneading time can be set as appropriate.

(Crosslinking and shaping)

It is possible to obtain a sheet by shaping the composition with a forming machine corresponding to a desired shape, for example, an extruder, an injection molder, a compactor, or a roll, performing crosslinking reaction by heating to form a nitrile rubber cross-linked product, and fixing its shape in a sheet form. The composition may be cross-linked after preliminarily shaping it into a sheet or may be cross-linked at the same time of the shaping into a sheet.

The shaping temperature can be 100°C or more and 200°C or less and is preferably 130°C or more and 190°C or less. The shaping time can be 1 minute or more and 24 hours or less and is preferably 2 minutes or more and 1 hour or less.

Secondary cross-linking may be performed by further heating the sheet. No specific limitations are placed on a heating method. Examples of the heating method include press heating, steam heating, oven heating, and hot air heating.

<Sheet for battery module>

No specific limitations are placed on the thickness of the sheet for battery module of this disclosure. The thickness can be 0.1 mm or more and 50 mm or less. The thickness is preferably 0.5 mm or more in terms of preventing the problems at the time of thermal runaway. The thickness is preferably 30 mm or less in terms of battery capacity.

The breaking strength of the sheet of this disclosure is preferably 10.0 MPa or more, and more preferably 20.0 MPa or more. No specific limitations are placed on the upper limit of the breaking strength. However, the upper limit of the breaking strength can be 100.0 MPa or less.

The thermal conductivity of the sheet of this disclosure is preferably 1 W/m·K or less, and more preferably 0.7 W/m·K or less. No specific limitations are placed on the lower limit of the thermal conductivity. However, the lower limit of the thermal conductivity can be 0.01 W/m·K or more.

The thermal conductivity is a value measured in accordance with ASTM D5470.

The sheet of this disclosure can be used in a battery module. The sheet of this disclosure is preferably arranged in proximity to a battery cell in the battery module and more preferably arranged directly in contact with the battery cell.

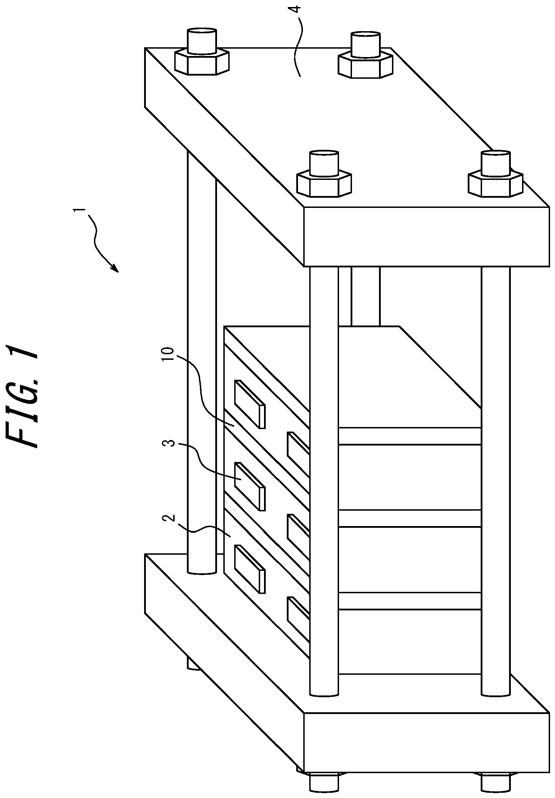

For example, as illustrated in FIG. 1, the sheet of this disclosure can be arranged between adjacent battery cells to be an intercell spacer. Such a structure can insulate adjacent battery cells one another to prevent chain-reaction thermal runaway and also can prevent adjacent battery cells from catching fire when a battery cell ignites.

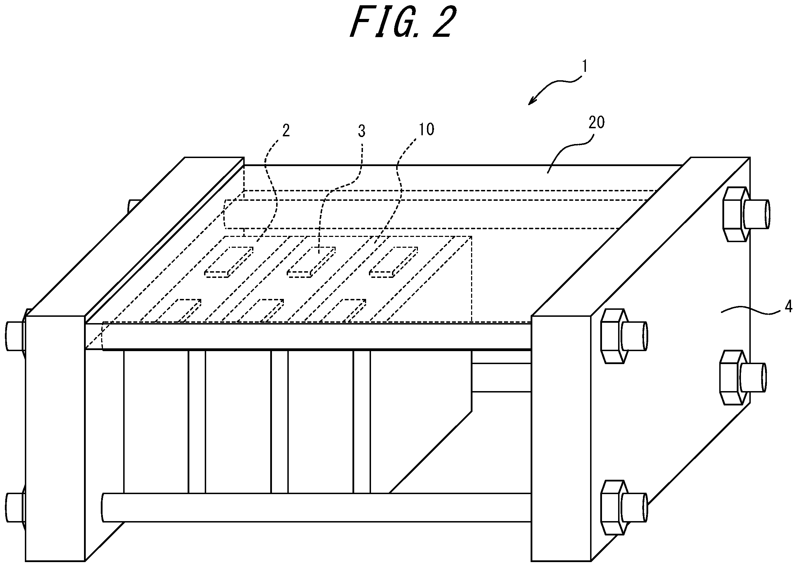

As illustrated in FIG. 2, the sheet of this disclosure can be arranged in proximity to battery cells. This can cause the sheet of this disclosure to function as a fire prevention sheet. When a battery cell ignites, the sheet of this disclosure can prevent other members in the battery module and other battery modules from catching fire.

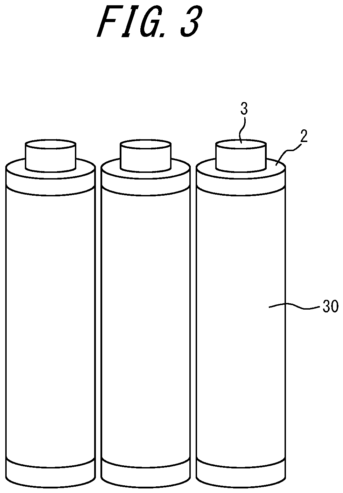

As illustrated in FIG. 3, the sheet of this disclosure can be wrapped around each battery cell to be an intercell film. Such a structure can insulate adjacent battery cells one another to prevent chain-reaction thermal runaway and also can prevent adjacent battery cells from catching fire when a battery cell ignites.

EXAMPLES

The present disclosure is described in more detail below through examples. However, this disclosure is not limited to these examples. In the examples, part, %, and ppm indicate part by mass, mass%, and mass ppm, respectively, unless otherwise noted.

Evaluations of examples and comparative examples were performed as described below.

<Breaking strength>

Each sheet in the examples and comparative examples was punched out with a No. 3 dumbbell to form a test piece, and the breaking strength of the rubber cross-linked product was measured in accordance with JIS K6251.

<Rate of change in thermal resistance>

The thermal resistance was measured in accordance with ASTM D5470 standard. Specifically, the measurement is performed as described below.

Each sample for measuring the thermal resistance was formed by sandwiching each sheet in the examples and comparative examples with two aluminum plates ($\varphi$33 mm $\times$ thickness 3 mm) on the top and bottom and pressing the sheet at 5 MPa.

The sample was sandwiched between the cooling plate and the heater of a thermal resistance measurement device (produced by Analysis Tech; TIM tester 1300) and heated by the heater under a pressure of 5 MPa. A thermal resistance Rt [K•cm$^2$/W] was calculated by the following formula from a heater temperature $T_1$ [°C], a cooling plate temperature $T_2$ [°C], a heat flow Q [W], and a sample area S [cm$^2$] to be a thermal resistance (before heating).

$$Rt = (T_1 - T_2) \times S/Q$$

The sample was heated at 300°C for one hour under a pressure of 5 MPa. After the heating, the sample was sandwiched again by the cooling plate and the heater in the same way as the above and heated by the heater under a pressure of 5 MPa. The thermal resistance Rt was calculated by the above formula to be a thermal resistance (after heating).

A rate of change in thermal resistance was determined by the following formula from the thermal resistance (before heating) and the thermal resistance (after heating). A greater rate of change in thermal resistance has greater effect to inhibit thermal conduction at abnormally high temperatures.

Rate of change in thermal resistance = thermal resistance (after heating)/thermal resistance (before heating)

<Distance between spacers>

For each sample before heating and after heating, the distance between aluminum plates under a pressure of 5 MPa was measured, and the evaluation was performed as described below. The following evaluation of "Good" indicates that the presence of the sheet can ensure the distance between the battery cells and the distance between the battery cell and other members even under abnormally high temperature.

The distance after heating is 50% or more of the distance before heating: Good
The distance after heating is less than 50% of the distance before heating: Poor

<Fireproof test>

Two lithium ion battery cells were stacked as a sample, and each sheet in the examples and comparative examples was arranged between the cells as an intercell spacer and fixed by metal plates from the outside.

The side surface of one side battery cell was hit by a nail to forcibly cause thermal runaway, and it was confirmed whether the other battery cell caught fire from that battery cell.

No fire at the other battery: Good
Fire at the other battery: Poor

Components used for producing each sheet in the examples and comparative examples are as described below.

<Nitrile rubber>

The used nitrile rubber is a high saturated nitrile rubber that was synthesized as described below.

In a reactor, 0.2 parts of sodium carbonate was dissolved into 200 parts of deionized water, and 2.25 parts of fatty acid potassium soap (potassium salt of fatty acid) was added thereto to prepare a soapy aqueous solution. Then, 37 parts of acrylonitrile and 0.47 parts of t-dodecyl mercaptan (molecular weight modifier) were added to the soapy aqueous solution in this order, the internal gas was substituted by nitrogen 3 times, and 63 parts of 1,3 butadiene was then added thereto. Subsequently, the temperature in the reactor was kept at 5°C, 0.1 parts of cumene hydroperoxide (polymerization initiator), a reductant, and a moderate amount of chelating agent were added thereto, and polymerization reaction was then performed for 16 hours while keeping the temperature at 5°C. Subsequently, 0.1 parts of hydroquinone (polymerization terminator) aqueous solution with a concentration of 10% was add thereto to stop the polymerization reaction, and residual monomers were removed using a rotary evaporator with a water temperature of 60°C to obtain latex (solid content concentration: about 25%) of the nitrile rubber.

Subsequently, the latex obtained as above was added into an aqueous aluminum sulfate solution with an amount of 3% with respect to the dry weight of the rubber contained in the latex and stirred to solidify the latex. After the latex was isolated by filtration while washing it with water, the latex was subjected to vacuum drying at 60°C for 12 hours to obtain a nitrile rubber. Then, the obtained nitrile rubber was dissolved in acetone to have a concentration of 12% and then put in an autoclave. A palladium silica catalyst was added thereto with 200 ppm with respect to the nitrile rubber, and hydrogenation reaction was then performed at a hydrogen pressure of 3 MPa. After the end of the hydrogenation reaction, the reactant was poured into a large volume of water to solidify it, and isolated by filtration and dried to obtain a high saturated nitrile rubber. For the composition of the obtained high saturated nitrile rubber, the acrylonitrile unit was 36.2%, the butadiene unit (including a saturated part) was 63.8%, and the iodine value was 28. The Mooney viscosity ($ML_{1+4}$, 100°C) measured in accordance with JIS K6300-1 was 77.

<Thermally dissipated filler>

- Melamine cyanurate

Produced by Nissan Chemical Corporation; Product name: MC-6000; Average particle diameter: 2 $\mu$m

- Melamine

Produced by Nissan Chemical Corporation; Product name: melamine

<Filler>

- Carbon black

Produced by Tokai Carbon Co., Ltd.; Product name: Seast SO

<Cross-linker>

[0109] - 1,3- and 1,4-bis(t-butylperoxyisoproyl)benzene 40% product
Peroxide content: 40 mass%; Carrier (kaolin): 60 mass%

<Example 1>

Using a Banbury mixer, 50 parts of melamine cyanurate was added to 100 parts of the above high saturated nitrile rubber to be mixed at 50°C for 5 minutes. Subsequently, the obtained mixture was transferred to a roll with a temperature of 50°C, and 6 parts of 1,3- and 1,4-bis(t-butylperoxyisoproyl)benzene 40% product was added thereto and kneaded to obtain a nitrile rubber composition.

The obtained nitrile rubber composition was put into a mold with 15 cm in length, 15 cm in width, and 0.2 cm in depth, and press molded at 170°C for 20 minutes while being pressured at a pressing pressure of 10 MPa to obtain a sheet-shaped cross-linked product.

The evaluation results of the obtained sheet are presented in Table 1.

<Examples 2 to 7 and Comparative Examples 1 to 3>

Each sheet was obtained in the same way as in Example 1 except that the components and amounts were changed as presented in Table 1, and the temperature and time of the cross-link condition were as presented in Table 1. Methacrylic acid zinc salt in Examples 3 to 5 was added at a timing when melamine cyanurate was mixed with the high saturated nitrile rubber. In Example 7 and Comparative Example 3, melamine and carbon black were used, respectively, instead of melamine cyanurate. The evaluation results of each sheet are presented in Table 1.

[Table 1]

| | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|
| Component (part by mass) | High saturated nitrile rubber | 100 | 100 | 100 | 100 | 100 | 100 | 100 | 100 | 100 | 100 |
| | Methacrylic acid zinc salt | - | - | 18 | 85 | 85 | - | - | - | - | - |
| | Melamine cyanurate | 50 | 100 | 39 | 37 | 93 | 50 | - | 300 | - | - |
| | Melamine | - | - | - | - | - | - | 50 | - | - | - |
| | Carbon black | - | - | - | - | - | - | - | - | - | 40 |
| | 1,3-, 1,4-bis(t-butylperoxyisoproyl)benzene 40% product | 6 | 6 | 4.7 | 11.1 | 11.1 | 6 | 6 | 6 | 6 | 6 |
| Shaping | Cross-link condition | 170°C × 20 min | 170°C × 20 min | 170°C × 20 min | 170°C × 20 min | 170°C × 20 min | 190°C × 5 min | 170°C × 20 min | 170°C × 20 min | 170°C × 20 min | 170°C × 20 min |
| Evaluation | Breaking strength (Mpa) | 12.5 | 17.4 | 24.3 | 36.1 | 32.7 | 10.9 | 12.1 | 14.3 | 5.43 | 26.4 |
| | Rate of change in thermal resistance | 20 | 25 | 19 | 15 | 16 | 18 | 22 | 33 | 1 | 1 |
| | Distance between spacers | Good | Good | Good | Good | Good | Good | Good | Poor | Poor | Poor |
| | Fireproof test | Good | Good | Good | Good | Good | Good | Good | Poor | Poor | Poor |

It is found that the sheet for battery module of this disclosure can inhibit thermal conduction at abnormally high temperatures and ensure the distance between the battery cells and the distance between the battery cell and other members even under abnormally high temperature.

INDUSTRIAL APPLICABILITY

The use of the sheet for battery module of this disclosure for the battery module can reduce the occurrence of the problems associated with thermal runaway. The battery module of this disclosure has high safety and is useful in wide range of applications such as in-car application, electric power leveling application, and mobile application.

REFERENCE SIGNS LIST

1      battery module
2      cell
3      electrode terminal
4      support member
10     intercell spacer
20     fire prevention sheet
30     intercell film

**Claims**

1.  A sheet for battery module, comprising a nitrile rubber cross-linked product and a thermally dissipated filler, wherein the thermally dissipated filler is 1 part by mass or more and 200 parts by mass or less per 100 parts by mass of the nitrile rubber.

2.  The sheet for battery module according to claim 1, wherein the sheet has a breaking strength of 10.0 MPa or more.

3.  The sheet for battery module according to claim 1, wherein the thermally dissipated filler has a dissipation temperature of 50°C or more and 500°C or less and absorbs heat at the time of dissipation.

4.  The sheet for battery module according to claim 1, wherein the thermally dissipated filler is a melamine compound.

5.  The sheet for battery module according to claim 1, wherein the nitrile rubber is a nitrile rubber having an iodine value of 120 or less.

6.  The sheet for battery module according to claim 1, wherein the cross-linked product is a cross-linked product formed by an organic peroxide cross-linker.

7.  A battery module comprising the sheet for battery module according to any one of claims 1 to 6.

8.  The battery module according to claim 7, comprising a plurality of battery cells, wherein the sheet for battery module is arranged in proximity to at least one battery cell.

9.  The battery module according to claim 7, comprising a plurality of battery cells, wherein the sheet for battery module is arranged between adjacent battery cells.

# FIG. 1

EP 4 398 396 A1

FIG. 2

# FIG. 3

<div align="center">

**INTERNATIONAL SEARCH REPORT**

</div>

| International application No. |
|---|
| **PCT/JP2022/031626** |

**A. CLASSIFICATION OF SUBJECT MATTER**

*H01M 50/293*(2021.01)i; *C08J 5/18*(2006.01)i; *C08K 3/013*(2018.01)i; *C08K 5/14*(2006.01)i; *C08K 5/3492*(2006.01)i; *C08L 9/02*(2006.01)i; *H01M 10/613*(2014.01)i; *H01M 10/6555*(2014.01)i; *H01M 50/204*(2021.01)i
FI: H01M50/293; C08L9/02; C08K3/013; C08K5/3492; C08K5/14; H01M10/613; H01M10/6555; C08J5/18 CEQ; H01M50/204 401F

According to International Patent Classification (IPC) or to both national classification and IPC

**B. FIELDS SEARCHED**

Minimum documentation searched (classification system followed by classification symbols)

H01M50/293; C08J5/18; C08K3/013; C08K5/14; C08K5/3492; C08L9/02; H01M10/613; H01M10/6555; H01M50/204

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-206605 A (SEKISUI CHEMICAL CO LTD) 27 December 2018 (2018-12-27) paragraphs [0018]-[0020], [0029]-[0039], [0104], fig. 1 | 1-9 |
| A | WO 2020/261940 A1 (SEKISUI POLYMATECH CO., LTD.) 30 December 2020 (2020-12-30) paragraphs [0014], [0024]-[0030], [0038], fig. 4 | 1-9 |
| A | WO 2010/058587 A1 (PANASONIC CORPORATION) 27 May 2010 (2010-05-27) paragraphs [0024], [0030], [0034]-[0036], fig. 2 | 1-9 |
| A | JP 2020-50841 A (SEKISUI CHEMICAL CO LTD) 02 April 2020 (2020-04-02) | 1-9 |
| A | WO 2014/115806 A1 (ZEON CORPORATION) 31 July 2014 (2014-07-31) | 1-9 |

☐ Further documents are listed in the continuation of Box C.    ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 October 2022** | **25 October 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/031626**

| Patent document cited in search report | | | Publication date (day/month/year) | Patent family member(s) | Publication date (day/month/year) |
|---|---|---|---|---|---|
| JP | 2018-206605 | A | 27 December 2018 | (Family: none) | |
| WO | 2020/261940 | A1 | 30 December 2020 | EP 3993083 A1 paragraphs [0021], [0044]-[0059], [0073]-[0075], fig. 4 CN 113906611 A KR 10-2022-0022900 A | |
| WO | 2010/058587 | A1 | 27 May 2010 | US 2011/0177366 A1 paragraphs [0042]-[0044], [0055]-[0057], [0069]-[0073], fig. 2 EP 2299535 A1 CN 102113166 A | |
| JP | 2020-50841 | A | 02 April 2020 | (Family: none) | |
| WO | 2014/115806 | A1 | 31 July 2014 | US 2015/0353811 A1 EP 2949696 A1 CN 104937022 A KR 10-2015-0110534 A | |

Form PCT/ISA/210 (patent family annex) (January 2015)

**EP 4 398 396 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018206605 A
- WO 2020129274 A